# EUROPÄISCHE PATENTANMELDUNG

(11) **EP 4 275 927 A1**
(43) Veröffentlichungstag der Anmeldung: **15.11.2023**
(21) Anmeldenummer: 22173242.3
(22) Anmeldetag: 13.05.2022
(51) Int. Cl.: B60F 1/04

(54) **FAHRZEUG**

(71) Anmelder: XCMG European Research Center GmbH, 47807 Krefeld (DE)
(72) Erfinder: Hornig, Thomas, 47800 Krefeld (DE); Prust, David, 40215 Düsseldorf (DE)
(74) Vertreter: Dr. Stark & Partner Patentanwälte mbB

(57) **Zusammenfassung**

Die Erfindung betrifft ein Fahrzeug (1) mit zumindest zwei vorderen und zwei hinteren Schienenrädern (2) sowie zumindest zwei vorderen und zwei hinteren Straßenrädern (6).

Für ein verbessertes Fahrzeug (1) sind jeweils ein Straßenrad (6) und ein Schienenrad (2) voneinander beabstandet an einem unterseitig am Fahrzeug verschwenkbar gelagerten Wippenelement (9) angeordnet und bilden ein vorderes bzw. ein hinteres Radpaar, wobei bei jedem Radpaar das Wippenelement (9) um eine Schwenklagerung (10) kraftbetätigt zwischen einer Schwenkposition für die Nutzung auf Schienen, bei der die Lauffläche (3) des Schienenrades (2) mit ihrem tiefsten Umfangspunkt tiefer ist als das Straßenrad (6) mit seinem tiefsten Umfangspunkt, und einer zweiten Schwenkposition für die Nutzung nicht auf Schienen, bei der der Spurkranz des Schienenrades mit seinem tiefsten Umfangspunkt in einer höheren Position ist als das Straßenrad mit seinem tiefsten Umfangspunkt, verschwenkbar ist, wobei die Schwenklagerung auf der Verbindungslinie zwischen dem Drehlager (12) des entsprechenden Straßenrads (6) und dem Drehlager (12) des entsprechenden Schienenrads (2) oder mit einem orthogonalen Abstand oberhalb dieser Verbindungslinie vorgesehen ist.

## Beschreibung

Die Erfindung betrifft ein Fahrzeug mit zumindest zwei vorderen Schienenrädern und zwei hinteren Schienenrädern, die jeweils eine Lauffläche und einen demgegenüber vorstehenden Spurkranz aufweisen und für die Nutzung auf Schienen vorgesehen sind, wobei zwei vordere Schienenräder ein vorderes Schienenräderpaar mit miteinander fluchtenden Drehachsen bilden und zwei hintere Schienenräder ein hinteres Schienenräderpaar mit miteinander fluchtenden Drehachsen bilden, und mit zumindest zwei vorderen Straßenrädern und zwei hinteren Straßenrädern, die für die Nutzung nicht auf Schienen, insbesondere auf Straßen, vorgesehen sind, wobei zwei vordere Straßenräder ein vorderes Straßenräderpaar mit miteinander fluchtenden Drehachsen bilden und zwei hintere Straßenräder ein hinteres Straßenräderpaar mit miteinander fluchtenden Drehachsen bilden.

Unter Fahrzeug werden vorliegend vorzugsweise Kraftfahrzeuge einschließlich fahrbarer Baumaschinen, wie z. B. Zweiwegebagger oder dergleichen, verstanden. Die Fahrzeuge können jedoch auch ohne eigenen Antrieb, insbesondere Fahr-Antrieb, sein, so dass für die Fortbewegung und ggf. auch für den Betrieb ein externer Antrieb erforderlich sein kann.

Aus der Praxis sind Zweiwegebagger bekannt, die zwei Radachsen mit Straßenrädern für die Straßenfahrt und zwei Schienenachsen mit Schienenrädern für die Schienenfahrt aufweisen.

Die Schienenachse wird dabei über zwei Schwingen kreisförmig um den Lagerpunkt geführt.

Zweiwegebagger sind mit einem großen Funktionsraum versehen und können die typischen Tätigkeiten eines üblichen Radbaggers erfüllen, sind zum anderen aber auch über verstellbare Schienenachsen für einen Arbeitsbetrieb auf Schienen einsetzbar.

Der Antrieb erfolgt dabei ausschließlich über die Straßenräder, die auch beim Schienenbetrieb über einen Reibkontakt mit den Schienen als Antriebsquelle dienen. Die Führung auf den Schienen erfolgt jedoch über die Schienenräder.

Der Antrieb über die Straßenräder führt dazu, dass durch den direkten Kontakt zwischen Straßenrädern und Schienen ein erhöhter Verschleiß der Straßenräder erfolgt und somit eine geringere Lebensdauer der Straßenräder resultiert. Außerdem ist für die Verstellung der Schienenachse ein Getriebe erforderlich, das bei üblichen Zweiwegebaggern sehr viel Platz einnimmt, weil die Schienenräder um die feststehenden Straßenräder herumgeführt werden müssen. Beim Straßenbetrieb sind die Schienenräder eingefahren und der Zweiwegebagger wird hierdurch verlängert. Beim Schienenbetrieb sind die Schienenräder ausgefahren und stehen in etwa auf gleichem Niveau wie die Straßenräder, damit sie in direktem Kontakt mit den Schienen sind. Somit ist zumindest aufgrund des Schienenaufbaus, bei dem die Oberkante der Schiene gegenüber dem eigentlichen Untergrund deutlich erhöht vorgesehen ist, eine höhere Position gegenüber dem Untergrund gegeben als wenn der Zweiwegebagger beispielsweise auf einer Straße oder dergleichen steht.

Durch den erhöhten Schwerpunkt auf den Schienen wird die maximale Traglast des Zweiwegebaggers, beispielsweise bei seitlichem Ausschwenken, eingeschränkt.

Aufgabe der Erfindung ist es, ein Fahrzeug anzugeben, welches die vorgenannten Nachteile vermeidet und eine einfache technische Konstruktion aufweist.

Diese Aufgabe wird bei einem gattungsgemäßen Fahrzeug dadurch gelöst, dass jeweils ein Straßenrad und ein Schienenrad voneinander beabstandet mit Ihrem jeweiligen Drehlager an einem unterseitig an dem Fahrzeug verschwenkbar gelagerten starren Wippenelement angeordnet sind und entweder ein vorderes Radpaar oder aber ein hinteres Radpaar bilden, wobei bei jedem Radpaar das Wippenelement um eine Schwenklagerung mittels zumindest einer Verlagerungseinrichtung zwischen einer ersten Schwenkposition für die Nutzung auf Schienen und einer zweiten Schwenkposition für die Nutzung nicht auf Schienen kraftbetätigt verschwenkbar ist, wobei die Schwenklagerung entweder auf der Verbindungslinie zwischen dem Drehlager des entsprechenden Straßenrads und dem Drehlager des entsprechenden Schienenrads oder mit einem orthogonalen Abstand oberhalb dieser Verbindungslinie vorgesehen ist und wobei bei der ersten Schwenkposition die Lauffläche jedes an dem Wippenelement angeordneten Schienenrades mit ihrem jeweils tiefsten Umfangspunkt jeweils in einer tieferen Position ist als jedes an dem Wippenelement angeordnete Straßenrad mit seinem jeweiligen tiefsten Umfangspunkt und wobei bei der zweiten Schwenkposition der Spurkranz jedes an dem Wippenelement angeordneten Schienenrades mit seinem jeweils tiefsten Umfangspunkt jeweils in einer höheren Position ist als jedes an dem Wippenelement angeordnete Straßenrad mit seinem jeweiligen tiefsten Umfangspunkt.

Somit hat das Fahrzeug zumindest vier Radpaare, nämlich zwei vordere Radpaare und zwei hintere Radpaare. Zwei dieser Radpaare sind seitlich links und zwei dieser Radpaare sind seitlich rechts vorgesehen.

Durch die Verlagerung des Wippenelements eines Radpaares kann entweder das jeweilige Schienenrad oder aber das jeweilige Straßenrad des Radpaares zum Einsatz kommen. Dabei erfolgt die Verlagerung des jeweiligen Straßenrades gleichzeitig mit der Verlagerung des jeweiligen Schienenrades. Durch die Wippe ist der Platzbedarf der jeweiligen Verlagerungskinematik gegenüber anderen System reduziert.

Vorzugsweise kann zumindest eine Schwenklagerung an dem ihr zugeordneten Wippenelement zumindest in etwa mittig, vorzugsweise mittig, auf der Verbindungslinie zwischen dem Drehlager des entsprechenden Straßenrads und dem Drehlager des entsprechenden Schienenrads oder mit einem orthogonalen Abstand oberhalb eines solchen Punkts auf dieser Verbindungslinie vorgesehen sein. Bei einer oberhalb eines Punkts auf der Verbindungslinie zwischen dem Drehlager des entsprechenden Straßenrads und dem Drehlager des entsprechenden Schienenrads vorgesehenen Schwenklagerung kann das Wippenelement in seitlicher Ansicht als Pfeilviereck, V-förmig oder dreieckig ausgebildet sein.

Vorteilhafterweise können bei zumindest einem Schienenräderpaar die beiden Schienenräder auf einer gemeinsamen durchgehenden Schienenradachse angeordnet sein und vorzugsweise können ihre jeweiligen Wippenelemente miteinander gekoppelt sein. Somit können die Schienenräder entweder einzeln verlagerbar wie bei einer Einzelradaufhängung oder aber für zumindest eine Achse gemeinsam verlagerbar sein.

Auch können bei zumindest einem Straßenräderpaar die beiden Straßenräder auf einer gemeinsamen durchgehenden Radachse angeordnet sein, und vorzugsweise können ihre jeweiligen Wippenelemente miteinander gekoppelt sein. Somit können die Straßenräder entweder einzeln verlagerbar wie bei einer Einzelradaufhängung oder aber für zumindest eine Achse gemeinsam verlagerbar sein.

Erfindungsgemäß können bei zumindest einem Straßenräderpaar die Straßenräder jeweils mittels eines Drehgelenks schwenkbar gelagert sein und es kann zumindest eine Verstelleinrichtung vorgesehen sein, die mit den Drehgelenken derart zusammenwirkt, dass bei Betätigung der Verstelleinrichtung eine Verschwenkung der beiden Straßenräder zum Lenken des Fahrzeugs resultiert. Vorteilhafterweise können auch mehrere Straßenräderpaare in entsprechender Weise jeweils, vorzugsweise unabhängig voneinander, lenkbar ausgebildet sein.

Dabei kann bei zumindest einem schwenkbar gelagerten Straßenräderpaar ein Achsdifferentialgetriebe vorgesehen sein, um somit unterschiedliche Radumdrehungen beim kurveninneren Straßenrad und beim kurvenäußeren Straßenrad zu ermöglichen.

Vorteilhafterweise kann bei jedem schwenkbar gelagerten Straßenrad zwischen seiner Innenseite in unverschwenktem Zustand einerseits und der Außenseite des Wippenelements, an dem dieses Straßenrad angeordnet ist, andererseits ein axialer Abstand vorgesehen sein, der größer ist als die axiale Verlagerung dieses Straßenrades bei maximaler Verschwenkung. Durch diesen Abstand wird eine größtmögliche Lenkfreiheit der Straßenräder gewährleistet.

Dabei kann die erste Schwenkposition des Wippenelements eine Endposition der insgesamt möglichen Verschwenkung des Wippenelements sein und/oder die zweite Schwenkposition des Wippenelements kann eine Endposition der insgesamt möglichen Verschwenkung des Wippenelements sein.

Bei einem bevorzugten Ausführungsbeispiel der Erfindung kann zumindest eine Verlagerungseinrichtung als ein auf das zugeordnete Wippenelement wirkender Hydraulikzylinder ausgebildet sein, wobei vorzugsweise der Ausfahrweg des Hydraulikzylinders den maximalen Schwenkwinkel des zugeordneten Wippenelements definiert. Somit kann der Hydraulikzylinder möglichst klein und/oder kurz ausgebildet werden und die Steuerung ist durch die Nutzung der Endpositionen vereinfacht. Bei der eingefahrenen Position ist zudem dann kein Druck im Hydraulikzylinder erforderlich. Wenn bei der ausgefahrenen Position der Hydraulikzylinder mit einer Zugkraft belastet wird, weil beispielsweise ein Totpunkt überfahren wurde, so ist dann auch bei der ausgefahrenen Position kein Druck im Hydraulikzylinder erforderlich.

Dabei kann durch Einfahren des Hydraulikzylinders das zugeordnete Wippenelement in seine erste Schwenkposition und durch Ausfahren des Hydraulikzylinders das zugeordnete Wippenelement in seine zweite Schwenkposition bringbar sein. Somit werden die Schienenräder bei eingefahrenem Hydraulikzylinder und die Straßenräder bei ausgefahrenem Hydraulikzylinder genutzt. Bei einem bevorzugten Ausführungsbeispiel der Erfindung kann die Geometrie zumindest eines Wippenelements, vorzugsweise der Wippenelemente der vorderen Radpaare und/oder der Wippenelemente der hinteren Radpaare, sowie die Position der Schwenklagerung einerseits und die Position der an dem jeweiligen Wippenelement angeordneten Straßenräder und/oder Schienenräder so gewählt sein, dass die erste Schwenkposition und/oder die zweite Schwenkposition eine stabile Schwenkposition darstellen, so dass diese Schwenkposition ohne zusätzliche Krafteinwirkung alleine aufgrund der Gravitation beibehalten wird.

Erfindungsgemäß kann zumindest ein Radpaar mittelbar oder unmittelbar mit zumindest einem vorzugsweise als Hydraulikantrieb ausgebildeten Antrieb verbunden sein, vorzugsweise können wenigstens alle vorderen Radpaare und/oder alle hinteren Radpaare jeweils mit zumindest einem vorzugsweise als Hydraulikantrieb ausgebildeten Antrieb verbunden Antrieb mittelbar oder unmittelbar verbunden sein.

Dabei kann bei zumindest einem Radpaar der Antrieb sowohl mit dem jeweiligen Straßenrad als auch mit dem jeweiligen Schienenrad verbunden sein, wobei vorzugsweise eine Umschalteinrichtung zur Umschaltung zwischen einer Wirkung des Antriebs auf das jeweilige Straßenrad und einer Wirkung des Antriebs auf das jeweilige Schienenrad mittels einer Umschalteinrichtung vorgesehen ist. Somit können die nicht im Einsatz befindlichen Räder dann vom Antrieb getrennt sein, so dass sie sich nicht wirkungslos mitdrehen.

Bei einem bevorzugten Ausführungsbeispiel der Erfindung kann der Antrieb mit allen Radpaaren verbunden sein.

Vorzugsweise können die Wippenelemente der vorderen Radpaare und die Wippenelemente der hinteren Radpaare hintereinander, vorzugsweise mit einem einen Freiraum bildenden Abstand hintereinander, und seitenweise jeweils miteinander fluchtend, jedoch in jeweils umgekehrter Ausrichtung vorgesehen sein. Somit schwenken die vorderen Wippenelemente und die hinteren Wippenelemente in jeweils umgekehrter Richtung.

In dem somit unabhängig von der Schwenkposition verbleibenden Freiraum zwischen den Wippenelementen der vorderen Radpaare und den Wippenelementen der hinteren Radpaare können dann technische Elemente, wie beispielsweise der Antrieb und/oder die Verstelleinrichtung für die Verschwenkung der beiden Straßenräder zum Lenken des Fahrzeugs vorgesehen sein.

Die zumindest zwei linken Wippenelemente sind jeweils miteinander fluchtend vorgesehen und die zumindest zwei rechten Wippenelemente sind jeweils miteinander fluchtend vorgesehen.

Erfindungsgemäß können in Längsrichtung des Fahrzeugs gesehen die Straßenradpaare als innere Radpaare und die Schienenradpaare als äußere Radpaare vorgesehen sein. Somit bilden die Schienenradpaare jeweils das vorderste und das hinterste Radpaar, wohingegen die Straßenradpaare die mittleren Radpaare bilden. Somit sind die Straßenradpaare während der Nutzung der Schienenradpaare im Bereich unterhalb des Fahrzeugs, so dass die Länge des Fahrzeugs gegenüber anderen Konstruktionen verringert ist.

Das Fahrzeug ist im unteren Bereich so ausgebildet, dass es dort einen schmaleren Bereich mit einer verringerten Breite hat und somit die Straßenräder im nicht genutzten Zustand dort ohne anzustoßen hingeschwenkt werden können. Dieser schmalere Bereich wird auch Unterwagen genannt.

Im Folgenden wird ein in der Zeichnung dargestelltes Ausführungsbeispiel der Erfindung erläutert. Es zeigen:
- Fig. 1: eine perspektivische Ansicht eines erfindungsgemäßen Fahrzeugs,
- Fig. 2: a) eine Detailansicht des Gegenstands nach Fig. 1 in einer ersten Schwenkposition, b) eine Detailansicht des Gegenstands nach Fig. 1 in einer zweiten Schwenkposition und
- Fig. 3: eine Frontalansicht des Gegenstands nach Fig. 1.

In allen Figuren werden für gleiche bzw. gleichartige Bauteile übereinstimmende Bezugszeichen verwendet.

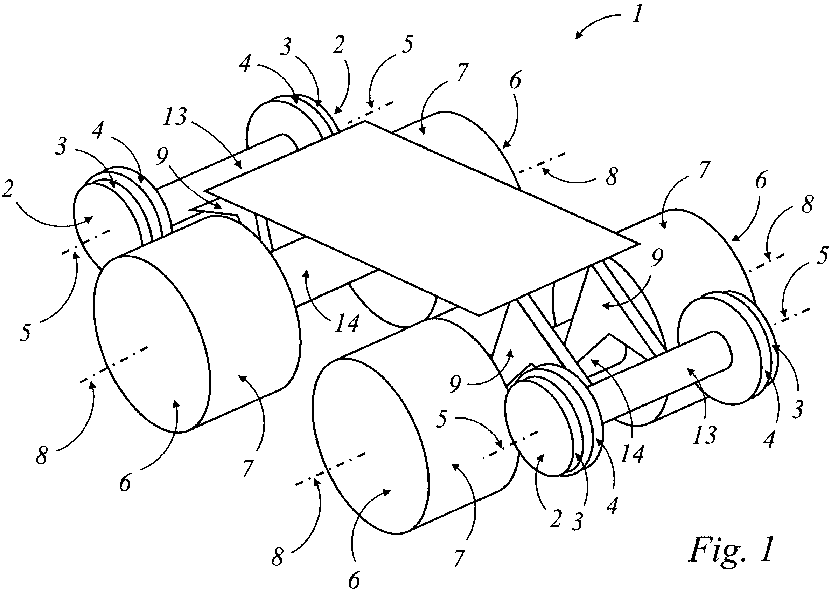

Fig. 1 zeigt ein Fahrzeug 1 mit zumindest zwei vorderen Schienenrädern 2 und zwei hinteren Schienenrädern 2, die jeweils eine Lauffläche 3 und einen demgegenüber vorstehenden Spurkranz 4 aufweisen und für die Nutzung auf Schienen vorgesehen sind.

Dabei ist jedoch lediglich der untere Bereich des Fahrzeugs 1 in der Zeichnung gezeigt, welcher in vereinfachter Weise als Oberwagen 16 und Unterwagen 17 dargestellt ist.

Zwei vordere Schienenräder 2 bilden dabei ein vorderes Schienenräderpaar mit miteinander fluchtenden Drehachsen 5 und zwei hintere Schienenräder 2 ein hinteres Schienenräderpaar mit miteinander fluchtenden Drehachsen 5, und mit zumindest zwei vorderen Straßenrädern 6 und zwei hinteren Straßenrädern 6, die jeweils eine Lauffläche 7 aufweisen und für die Nutzung nicht auf Schienen, insbesondere auf Straßen, vorgesehen sind, wobei zwei vordere Straßenräder 6 ein vorderes Straßenräderpaar mit miteinander fluchtenden Drehachsen 8 bilden und zwei hintere Straßenräder 6 ein hinteres Straßenräderpaar mit miteinander fluchtenden Drehachsen 8 bilden.

Das Fahrzeug 1 ist im dargestellten Ausführungsbeispiel als Zweiwegebagger ausgebildet und weist einen eigenen, in der Zeichnung nicht dargestellten Antrieb auf.

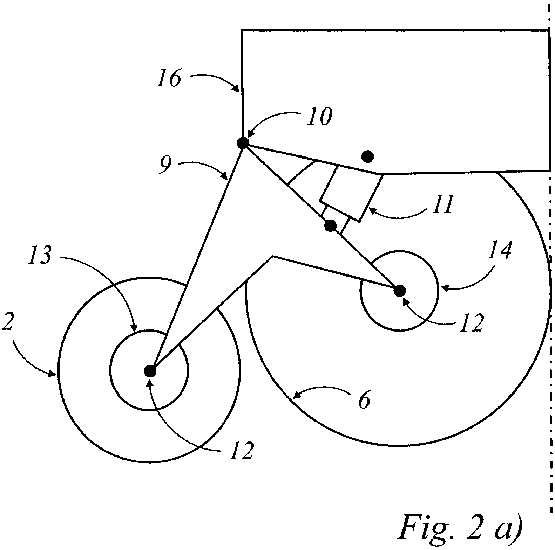

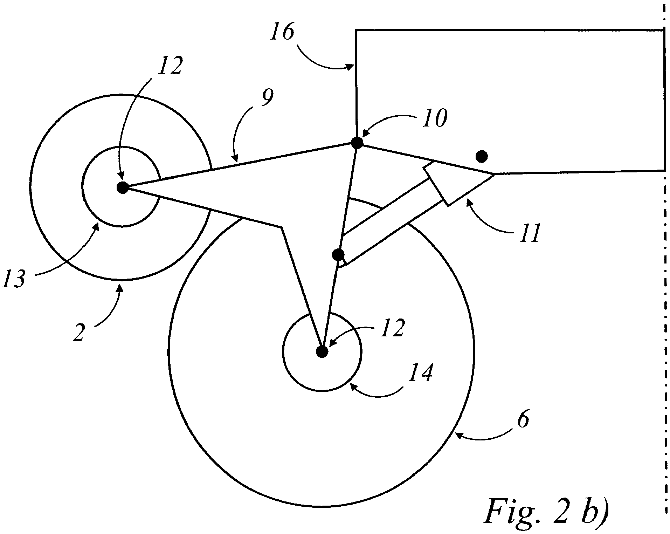

Wie gut aus Fig. 2 mit den Teilfiguren 2a) und 2b) ersichtlich, sind jeweils ein Straßenrad 6 und ein Schienenrad 2 voneinander beabstandet mit einem jeweiligen Drehlager 12 an einem unterseitig an dem Fahrzeug 1 verschwenkbar gelagerten starren Wippenelement 9 angeordnet. Sie bilden somit entweder ein vorderes Radpaar oder aber ein hinteres Radpaar. Somit hat das Fahrzeug 1 insgesamt zumindest vier Radpaare, nämlich zwei vordere Radpaare und zwei hintere Radpaare. Zwei dieser Radpaare sind seitlich links und zwei dieser Radpaare sind seitlich rechts vorgesehen.

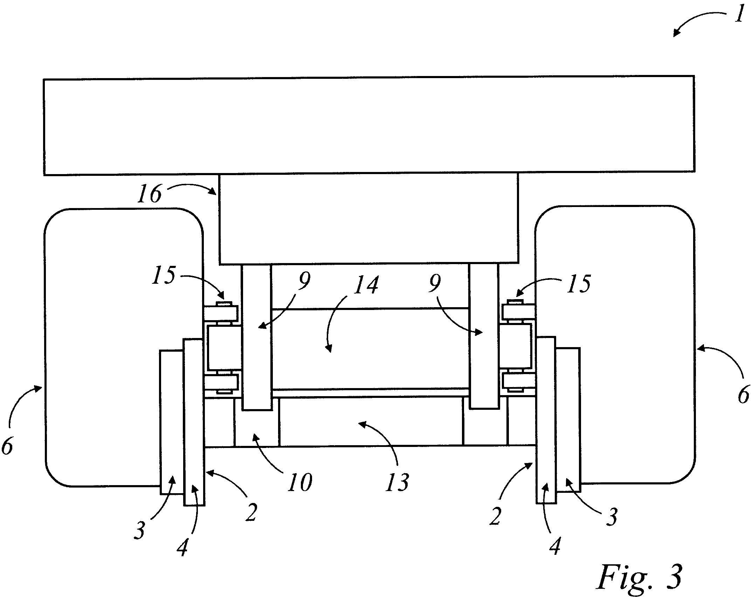

Bei jedem Radpaar ist das Wippenelement 9 um eine Schwenklagerung 10 mittels einer als Hydraulikzylinder ausgebildeten Verlagerungseinrichtung 11 zwischen einer in der Teilfigur 2a) und in Fig. 3 gezeigten ersten Schwenkposition für die Nutzung auf Schienen und einer in der Teilfigur 2b) gezeigten zweiten Schwenkposition für die Nutzung nicht auf Schienen kraftbetätigt verschwenkbar.

Dabei ist die Schwenklagerung 10 im gezeigten Ausführungsbeispiel nicht direkt auf der (theoretischen) Verbindungslinie zwischen dem Drehlager 12 des entsprechenden Straßenrads 6 und dem Drehlager 12 des entsprechenden Schienenrads 2 vorgesehen, sondern befindet sich mit einem orthogonalen Abstand oberhalb dieser Verbindungslinie. Das Wippenelement 9 ist somit in seitlicher Ansicht als Pfeilviereck (nicht-konvexes Deltoid) ausgebildet.

Wie in Fig. 3 gezeigt, ist bei der ersten Schwenkposition die Lauffläche 3 jedes an dem jeweiligen Wippenelement 9 angeordneten Schienenrades 2 mit ihrem jeweils tiefsten Umfangspunkt jeweils in einer tieferen Position als jedes an dem jeweiligen Wippenelement 9 angeordnete Straßenrad 6 mit seinem jeweiligen tiefsten Umfangspunkt.

Bei der zweiten Schwenkposition ist der Spurkranz 4 jedes an dem jeweiligen Wippenelement 9 angeordneten Schienenrades 2 mit seinem jeweils tiefsten Umfangspunkt jeweils in einer höheren Position als jedes an dem jeweiligen Wippenelement 9 angeordnete Straßenrad 6 mit seinem jeweiligen tiefsten Umfangspunkt.

Durch die Verlagerung des Wippenelements 9 eines Radpaares kommt entweder das jeweilige Schienenrad 2 oder aber das jeweilige Straßenrad 6 des Radpaares zum Einsatz, wobei die Verlagerung des jeweiligen Straßenrades 6 gleichzeitig mit der Verlagerung des jeweiligen Schienenrades 2 erfolgt.

Die Schwenklagerung 10 ist an dem zugeordneten Wippenelement 9 zumindest mit einem orthogonalen Abstand oberhalb eines in etwa mittigen Punkts auf der (theoretischen) Verbindungslinie zwischen dem Drehlager 12 des entsprechenden Straßenrads 6 und dem Drehlager 12 des entsprechenden Schienenrads 2 vorgesehen, wie insbesondere den Teilfiguren 2a) und 2b) zu entnehmen ist.

Bei beiden Schienenräderpaaren sind die jeweiligen beiden Schienenräder 2 auf einer gemeinsamen durchgehenden Schienenradachse 13 angeordnet und ihre jeweiligen Wippenelemente 9 sind miteinander gekoppelt. Somit sind die Schienenräder 2 für die jeweilige Achse jeweils gemeinsam verlagerbar.

Weiterhin sind auch bei beiden Straßenräderpaaren die jeweiligen beiden Straßenräder 6 auf einer gemeinsamen durchgehenden Straßenradachse 14 angeordnet und ihre jeweiligen Wippenelemente 9 sind miteinander gekoppelt. Somit sind auch die Straßenräder 6 für die jeweilige Achse jeweils gemeinsam verlagerbar.

Wie in Fig. 3 dargestellt, sind bei einem Straßenräderpaar die Straßenräder 6 jeweils mittels eines Drehgelenks 15 schwenkbar gelagert, und es ist eine in der Zeichnung nicht dargestellte Verstelleinrichtung vorgesehen, die mit den Drehgelenken 15 derart zusammenwirkt, dass bei Betätigung der Verstelleinrichtung eine Verschwenkung der beiden Straßenräder 6 zum Lenken des Fahrzeugs 1 resultiert.

Wie aus Fig. 2b) ersichtlich, sind die Geometrie des dort gezeigten Wippenelements 9, welches wie die anderen Wippenelemente 9 ausgebildet ist, sowie die Position der Schwenklagerung 10 einerseits und die Positionen des daran angeordneten Straßenrades 6 und Schienenrades 2 andererseits so gewählt, dass die zweite Schwenkposition eine stabile Schwenkposition darstellt, so dass diese Schwenkposition ohne zusätzliche Krafteinwirkung alleine aufgrund der Gravitation beibehalten wird.

Wie Fig. 1 entnommen werden kann, sind die Wippenelemente 9 der vorderen Radpaare und die Wippenelemente 9 der hinteren Radpaare jeweils mit einem einen Freiraum bildenden Abstand hintereinander und seitenweise jeweils miteinander fluchtend vorgesehen. Sie sind jedoch in jeweils umgekehrter Ausrichtung vorgesehen, so dass die vorderen Wippenelemente 9 und die hinteren Wippenelemente 9 in jeweils umgekehrter Richtung schwenken.

Dabei sind in Längsrichtung des Fahrzeugs 1 gesehen die Straßenradpaare als innere Radpaare und die Schienenradpaare als äußere Radpaare vorgesehen, so dass die Straßenradpaare jeweils das vorderste und das hinterste Radpaar und die Schienenradpaare die mittleren Radpaare bilden.

Das Fahrzeug 1 ist im unteren Bereich so ausgebildet, dass es dort einen schmaleren Bereich 16 mit einer verringerten Breite hat und somit die Straßenräder 6 im nicht genutzten Zustand dort ohne anzustoßen hingeschwenkt werden können. Dieser schmalere Bereich 16 wird auch Unterwagen genannt.

## Patentansprüche

1. Fahrzeug (1) mit zumindest zwei vorderen Schienenrädern (2) und zwei hinteren Schienenrädern (2), die jeweils eine Lauffläche (3) und einen demgegenüber vorstehenden Spurkranz (4) aufweisen und für die Nutzung auf Schienen vorgesehen sind, wobei zwei vordere Schienenräder (2) ein vorderes Schienenräderpaar mit miteinander fluchtenden Drehachsen (5) bilden und zwei hintere Schienenräder (2) ein hinteres Schienenräderpaar mit miteinander fluchtenden Drehachsen (5) bilden, und mit zumindest zwei vorderen Straßenrädern (6) und zwei hinteren Straßenrädern (6), die jeweils eine Lauffläche (3) aufweisen und für die Nutzung nicht auf Schienen, insbesondere auf Straßen, vorgesehen sind, wobei zwei vordere Straßenräder (6) ein vorderes Straßenräderpaar mit miteinander fluchtenden Drehachsen (5) bilden und zwei hintere Straßenräder (6) ein hinteres Straßenräderpaar mit miteinander fluchtenden Drehachsen (5) bilden, **dadurch gekennzeichnet, dass** jeweils ein Straßenrad (6) und ein Schienenrad (2) voneinander beabstandet mit einem jeweiligen Drehlager (12) an einem unterseitig an dem Fahrzeug (1) verschwenkbar gelagerten starren Wippenelement (9) angeordnet sind und entweder ein vorderes Radpaar oder aber ein hinteres Radpaar bilden, wobei bei jedem Radpaar das Wippenelement (9) um eine Schwenklagerung (10) mittels zumindest einer Verlagerungseinrichtung (11) zwischen einer ersten Schwenkposition für die Nutzung auf Schienen und einer zweiten Schwenkposition für die Nutzung nicht auf Schienen kraftbetätigt verschwenkbar ist, wobei die Schwenklagerung (10) entweder auf der Verbindungslinie zwischen dem Drehlager (12) des entsprechenden Straßenrads (6) und dem Drehlager (12) des entsprechenden Schienenrads (2) oder mit einem orthogonalen Abstand oberhalb dieser Verbindungslinie vorgesehen ist und wobei bei der ersten Schwenkposition die Lauffläche (3) jedes an dem Wippenelement (9) angeordneten Schienenrades (2) mit ihrem jeweils tiefsten Umfangspunkt jeweils in einer tieferen Position ist als jedes an dem Wippenelement (9) angeordnete Straßenrad (6) mit seinem jeweiligen tiefsten Umfangspunkt und wobei bei der zweiten Schwenkposition der Spurkranz (4) jedes an dem Wippenelement (9) angeordneten Schienenrades (2) mit seinem jeweils tiefsten Umfangspunkt jeweils in einer höheren Position ist als jedes an dem Wippenelement (9) angeordnete Straßenrad (6) mit seinem jeweiligen tiefsten Umfangspunkt.

2. Fahrzeug (1) nach dem vorhergehenden Anspruch, **dadurch gekennzeichnet, dass** zumindest eine Schwenklagerung (10) an dem ihr zugeordneten Wippenelement (9) zumindest in etwa mittig, vorzugsweise mittig, auf der Verbindungslinie zwischen dem Drehlager (12) des entsprechenden Straßenrads (6) und dem Drehlager (12) des entsprechenden Schienenrads (2) vorgesehen ist oder mit einem orthogonalen Abstand oberhalb eines solchen Punkts auf dieser Verbindungslinie.

3. Fahrzeug (1) nach dem vorhergehenden Anspruch, **dadurch gekennzeichnet, dass** bei zumindest einem Schienenräderpaar die beiden Schienenräder (2) auf einer gemeinsamen durchgehenden Schienenradachse (13) angeordnet sind und vorzugsweise ihre jeweiligen Wippenelemente (9) miteinander gekoppelt sind.

4. Fahrzeug (1) nach einem der vorhergehenden Ansprüche, **dadurch gekennzeichnet, dass** bei zumindest einem Straßenräderpaar die beiden Straßenräder (6) auf einer gemeinsamen durchgehenden Straßenradachse (14) angeordnet sind und vorzugsweise ihre jeweiligen Wippenelemente (9) miteinander gekoppelt sind.

5. Fahrzeug (1) nach einem der vorhergehenden Ansprüche, **dadurch gekennzeichnet, dass** bei zumindest einem Straßenräderpaar die Straßenräder (6) jeweils mittels eines Drehgelenks (15) schwenkbar gelagert sind und zumindest eine Verstelleinrichtung vorgesehen ist, die mit den Drehgelenken (15) derart zusammenwirkt, dass bei Betätigung der Verstelleinrichtung eine Verschwenkung der beiden Straßenräder (6) zum Lenken des Fahrzeugs (1) resultiert.

6. Fahrzeug (1) nach dem vorhergehenden Anspruch, **dadurch gekennzeichnet, dass** bei zumindest einem schwenkbar gelagerten Straßenräderpaar ein Achsdifferentialgetriebe vorgesehen ist.

7. Fahrzeug (1) nach einem der Ansprüche 5 oder 6, **dadurch gekennzeichnet, dass** bei jedem schwenkbar gelagerten Straßenrad (6) zwischen seiner Innenseite in unverschwenktem Zustand einerseits und der Außenseite des Wippenelements (9), an dem dieses Straßenrad (6) angeordnet ist, andererseits ein axialer Abstand vorgesehen ist, der größer ist als die axiale Verlagerung dieses Straßenrades (6) bei maximaler Verschwenkung.

8. Fahrzeug (1) nach dem vorhergehenden Anspruch, **dadurch gekennzeichnet, dass** die erste Schwenkposition des Wippenelements (9) eine Endposition der insgesamt möglichen Verschwenkung des Wippenelement (9) ist und/oder die zweite Schwenkposition des Wippenelement (9) eine Endposition der insgesamt möglichen Verschwenkung des Wippenelements (9) ist.

9. Fahrzeug (1) nach einem der vorhergehenden Ansprüche, **dadurch gekennzeichnet, dass** zumindest eine Verlagerungseinrichtung (11) als ein auf das zugeordnete Wippenelement (9) wirkender Hydraulikzylinder ausgebildet ist, wobei vorzugsweise der Ausfahrweg des Hydraulikzylinders den maximalen Schwenkwinkel des zugeordneten Wippenelements (9) definiert.

10. Fahrzeug (1) nach dem vorhergehenden Anspruch, **dadurch gekennzeichnet, dass** durch Einfahren des Hydraulikzylinders das zugeordnete Wippenelement (9) in seine erste Schwenkposition und durch Ausfahren des Hydraulikzylinders das zugeordnete Wippenelement (9) in seine zweite Schwenkposition bringbar ist.

11. Fahrzeug (1) nach einem der vorhergehenden Ansprüche, **dadurch gekennzeichnet, dass** die Geometrie zumindest eines Wippenelements (9), vorzugsweise der Wippenelemente (9) der vorderen Radpaare und/oder der Wippenelemente (9) der hinteren Radpaare, sowie die Position der Schwenklagerung (10) einerseits und die Position der an dem jeweiligen Wippenelement (9) angeordneten Straßenräder (6) und/oder Schienenräder (2) andererseits so gewählt sind, dass die erste Schwenkposition und/oder die zweite Schwenkposition eine stabile Schwenkposition darstellen.

12. Fahrzeug (1) nach einem der vorhergehenden Ansprüche, **dadurch gekennzeichnet, dass** zumindest ein Radpaar mittelbar oder unmittelbar mit zumindest einem vorzugsweise als Hydraulikantrieb ausgebildeten Antrieb verbunden ist, vorzugsweise wenigstens alle vorderen Radpaare und/oder alle hinteren Radpaare jeweils mit zumindest einem vorzugsweise als Hydraulikantrieb ausgebildeten Antrieb verbunden Antrieb mittelbar oder unmittelbar verbunden sind.

13. Fahrzeug (1) nach dem vorhergehenden Anspruch, **dadurch gekennzeichnet, dass** bei zumindest einem Radpaar der Antrieb sowohl mit dem jeweiligen Straßenrad (6) als auch mit dem jeweiligen Schienenrad (2) verbunden ist, wobei vorzugsweise eine Umschalteinrichtung zur Umschaltung zwischen einer Wirkung des Antriebs auf das jeweilige Straßenrad (6) und einer Wirkung des Antriebs auf das jeweilige Schienenrad (2) mittels einer Umschalteinrichtung vorgesehen ist.

14. Fahrzeug (1) nach einem der vorhergehenden Ansprüche, **dadurch gekennzeichnet, dass** die Wippenelemente (9) der vorderen Radpaare und die Wippenelemente (9) der hinteren Radpaare hintereinander, vorzugsweise mit einem einen Freiraum bildenden Abstand hintereinander, und seitenweise jeweils miteinander fluchtend, jedoch in jeweils umgekehrter Ausrichtung vorgesehen sind.

15. Fahrzeug (1) nach dem vorhergehenden Anspruch, **dadurch gekennzeichnet, dass** in Längsrichtung des Fahrzeugs (1) gesehen die Straßenradpaare als innere Radpaare und die Schienenradpaare als äußere Radpaare vorgesehen sind.
